# EUROPEAN PATENT SPECIFICATION

(11) **EP 4 162 413 B1**
(45) Date of publication and mention of the grant of the patent: **21.01.2026**
(21) Application number: 21734950.5
(22) Date of filing: 03.06.2021
(51) Int. Cl.: G06N 10/20, G06N 10/40, G06F 111/10, G06F 111/08, G02F 1/017, B82Y 20/00, G06F 30/20

(54) **QUANTUM SIMULATION WITH TRAPPED IONS IN A GRADIENT FIELD**
QUANTENSIMULATION MIT EINGESCHLOSSENEN IONEN IN EINEM GRADIENTENFELD
SIMULATION QUANTIQUE À IONS PIÉGÉS DANS UN CHAMP DE GRADIENT

(30) Priority: 03.06.2020 IL 27509920
(43) Date of publication of application: 12.04.2023
(73) Proprietor: Yeda Research and Development Co. Ltd., 7610002 Rehovot (IL)
(72) Inventor: OZERI, Roee, 7610002 Rehovot (IL); MANOVITZ, Tom, 7610002 Rehovot (IL); SHAPIRA, Yotam, 7610002 Rehovot (IL); AKERMAN, Nitzan, 7610002 Rehovot (IL); STERN, Adiel, 7610002 Rehovot (IL)
(74) Representative: Pearl Cohen Zedek Latzer Baratz UK LLP
(86) International application number: PCT/IL2021/050655
(87) International publication number: WO 2021/245666

(56) References cited:
- BRUZEWICZ COLIN D ET AL: "Trapped-ion quantum computing: Progress and challenges", APPLIED PHYSICS REVIEWS, AMERICAN INSTITUTE OF PHYSICS, 2 HUNTINGTON QUADRANGLE, MELVILLE, NY 11747, vol. 6, no. 2, 29 May 2019 (2019-05-29), XP012238166, DOI: 10.1063/1.5088164
- SAFFMAN M: "Quantum computing with atomic qubits and Rydberg interactions: progress and challenges", JOURNAL OF PHYSICS B, ATOMIC MOLECULAR AND OPTICAL PHYSICS, INSTITUTE OF PHYSICS PUBLISHING, BRISTOL, GB, vol. 49, no. 20, 4 October 2016 (2016-10-04), pages 202001, XP020309686, ISSN: 0953-4075, [retrieved on 20161004], DOI: 10.1088/0953-4075/49/20/202001
- CHRISTOF WUNDERLICH ET AL: "Quantum measurements and new concepts for experiments with trapped ions", ARXIV.ORG, CORNELL UNIVERSITY LIBRARY, 201 OLIN LIBRARY CORNELL UNIVERSITY ITHACA, NY 14853, 22 May 2003 (2003-05-22), XP080115839

## Description

### FIELD OF THE INVENTION

The present invention relates to the simulation of complex processes, systems, and materials by arrangements of physical devices and components to imitate the behavior and properties thereof. In particular, the present invention relates to the use of trapped ions configured as quantum-mechanical qubits in performing quantum simulations.

### BACKGROUND OF THE INVENTION

Progress in a broad range of scientific and technological fields is hampered by the difficulty of understanding and predicting the behavior of complex systems. Classical computing devices have limited abilities to simulate the behavior of highly complex systems, so increased attention is now being focused on quantum simulators.

Although quantum simulation is related to quantum computing, it is far easier and less costly to implement in many practical applications. Quantum simulation offers reduced system complexity, avoids the high engineering cost of universal gates and fault-tolerant architecture to compensate for fidelity loss, uses much smaller qubit arrays, and does not require the development and debugging of complex algorithms in order to accurately and faithfully represent target models.

Preferred platforms for quantum simulation rely on ion chains in a linear RF trap. Such an arrangement features long coherence times and high operational fidelity. Unfortunately, however, the scope of models which such simulators can currently accommodate is restricted because of limitations in managing and configuring the ion chain. In particular, as currently-implemented, ion chains are inherently open-ended 1-dimensional arrays, placing geometric limitations on the ability to model in higher dimensions. In addition, linear trapped ion simulators also currently lack the ability to simulate magnetic flux, an important factor in many interactions and physical phenomena. It would therefore be highly desirable to have trapped ion simulators with expanded capabilities that overcome these restrictions, for implementing more advanced modeling of a broader range of complex systems, especially in higher-order geometries and with varied topologies. These goals are attained by embodiments of the present invention.

The following documents disclose methods of using trapped ions configured as quantum-mechanical qubits to perform quantum simulations:
Bruzewicz Colin D et al: "Trapped-ion quantum computing: Progress and challenges", Applied Physics Reviews, American Institute of Physics, 2 Huntington Quadrangle, Melville, NY 11747, vol. 6, no. 2, 29 May 2019 (2019-05-29), XP012238166, DOI: 10.1063/1.5088164 [retrieved on 2019-05-29];
Saffman M: "Quantum computing with atomic qubits and Rydberg interactions: progress and challenges", Journal of Physics B, Atomic Molecular and Optical Physics, Institute of Physics Publishing, Bristol, GB, vol. 49, no. 20, 4 October 2016 (2016-10-04), page 202001, XP020309686, ISSN: 0953-4075, DOI: 10.1088/0953-4075/49/20/202001 [retrieved on 2016-10-04]; and
Christof Wunderlich Et Al: "Quantum measurements and new concepts for experiments with trapped ions", Arxiv.org, Cornell University Library, 201 Olin Library, Cornell University Ithaca, Ny 14853, 22 May 2003 (2003-05-22), XP080115839.

### SUMMARY OF THE INVENTION

Embodiments of the present invention provide trapped ion chains in the presence of a gradient field to break the symmetry of the chain, which in combination with an appropriately-configured set of bichromatic uniform global driving fields significantly expands the range of models that can be quantum-simulated.

Certain embodiments of the invention provide static gauge fields in the ion chain, while other embodiments provide time-varying fields. This supports versatile coupling geometries and topologies for ion chain connectivities having a variety of topology and features, such as closed boundary conditions and higher-dimensional Hamiltonians. Further embodiments provide efficient scaling to larger numbers of ions.

### BRIEF DESCRIPTION OF THE DRAWINGS

The subject matter disclosed may best be understood by reference to the following detailed description when read with the accompanying drawings in which:

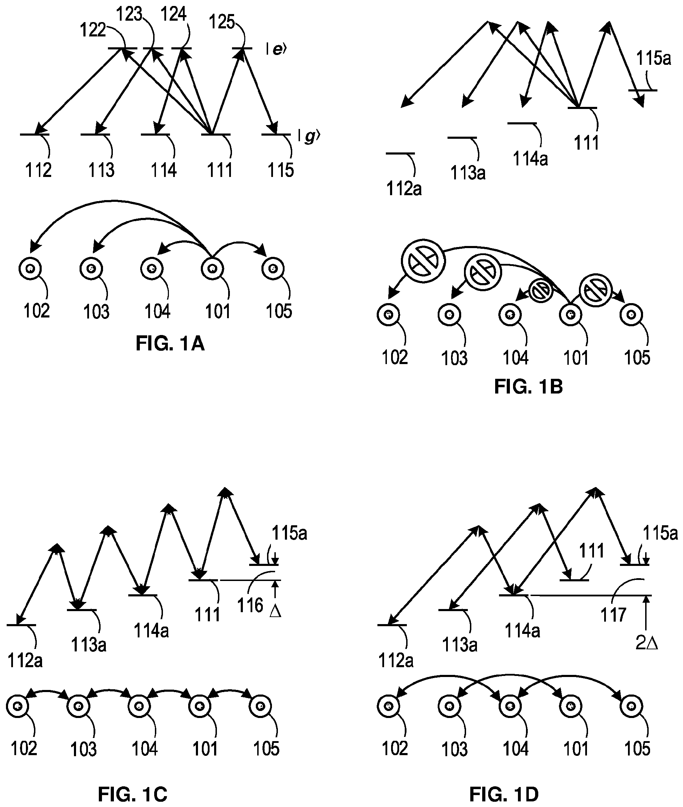

Fig. 1A conceptually illustrates a typical ion chain and a corresponding energy level diagram as currently implemented, showing allowed excitation hopping according to prior art implementations.
Fig. 1B conceptually illustrates the ion chain of Fig. 1A in the presence of a gradient field, showing the suppression of excitation hopping by moving the ion transitions off-resonance.
Fig. 1C conceptually illustrates the ion chain of Fig. 1B in the presence of the gradient field, showing that coupling is reinstated by introducing a driving frequency that bridges the gap induced by the gradient between nearest neighbor ions, according to an embodiment of the present invention.
Fig. 1D conceptually illustrates the ion chain of Fig. 1B in the presence of the gradient field, showing that coupling is reinstated by introducing a driving frequency that excitation state, wherein at least some of the ions are in an excited state but not all of the ions are in an excited state; (j) establish a gradient field in the vicinity of the chain of trapped ions, wherein the gradient field alters at least one energy level to differ from an ion of the chain to another ion of the chain by at least one energy gap; (k) stimulate excitation hopping from an excited ion of the chain to another ion of the chain, (l) enable state-selective fluorescence of the ions of the chain; and (m) determine from the state-selective fluorescence which ions of the chain are in an excited state, thereby determining a state of the simulation of the model; and (n) output the state of the simulation of the model.

### BRIEF DESCRIPTION OF THE DRAWINGS

The subject matter disclosed may best be understood by reference to the following detailed description when read with the accompanying drawings in which:
Fig. 1A conceptually illustrates a typical ion chain and a corresponding energy level diagram as currently implemented, showing allowed excitation hopping according to prior art implementations.
Fig. 1B conceptually illustrates the ion chain of Fig. 1A in the presence of a gradient field, showing the suppression of excitation hopping by moving the ion transitions off-resonance.
Fig. 1C conceptually illustrates the ion chain of Fig. 1B in the presence of the gradient field, showing that coupling is reinstated by introducing a driving frequency that bridges the gap induced by the gradient between nearest neighbor ions, according to an embodiment of the present invention.
Fig. 1D conceptually illustrates the ion chain of Fig. 1B in the presence of the gradient field, showing that coupling is reinstated by introducing a driving frequency that bridges the gap induced by the gradient between next-nearest neighbor ions, according to another embodiment of the present invention.
Fig. 2A is an energy-level diagram showing bichromatic driving field pairs for bridging ion resonance differences induced by a gradient field, according to an embodiment of the present invention.
Fig. 2B conceptually illustrates the tailoring of controlled resonances to implement mixed excitation hopping to bring about a simulated topology, according to another embodiment of the present invention.
Fig. 2C conceptually illustrates a ring topology traversed by a simulated magnetic flux, as implemented by the controlled resonances according to the embodiment of Fig. 2B.
Fig. 3 is a component diagram of apparatus for performing a quantum simulation, according to an embodiment of the present invention, featuring an ion chain in a gradient field with driving, measurement, and control devices.
Fig. 4 is a flowchart of a method according to an embodiment of the present invention.

For simplicity and clarity of illustration, elements shown in the figures are not necessarily drawn to scale, and the dimensions of some elements may be exaggerated relative to other elements. In addition, reference numerals may be repeated among the figures to indicate corresponding or analogous elements.

### DETAILED DESCRIPTION OF THE PRESENT INVENTION

Fig. 1A conceptually illustrates a typical ion chain containing ions 101, 102, 103, **104,** and **105,** along with a corresponding energy level diagram according to prior art implementations. Respective ground state |*g*〉 levels 111, 112, 113, **114**, and **115**, and respective excited state levels |*e*〉 are the same for each of the ions allowing excitation to hop from any one ion to any other ion, as shown in a representative case for ion 101.

Fig. 1B conceptually illustrates the ion chain **101**, **102**, **103**, **104**, and **105** of Fig. 1A in the presence of a gradient field (not shown), which alters the energy levels **111**, **112, 113, 114,** and **115** (Fig. 1A) to differ from one ion to another, respectively shown as **111, 112a, 113a, 114a,** and 115a. In this case, the ion transitions are moved off-resonance, resulting in the suppression of excitation hopping, as shown.

Fig. 1C conceptually illustrates the ion chain **101, 102, 103, 104,** and **105 of** Fig. 1B in the presence of the gradient field (not shown), showing that coupling is reinstated by introducing a driving frequency that bridges a gap 116 having an energy increment Δ induced by the gradient field between nearest neighbor ions, according to an embodiment of the present invention.

Fig. 1D conceptually illustrates the ion chain **101, 102, 103, 104,** and **105** of Fig. 1B in the presence of the gradient field (not shown), showing that coupling is reinstated by introducing a driving frequency that bridges a gap 117 having an energy increment 2Δ induced by the gradient between next-nearest neighbor ions, according to an embodiment of the present invention.

According to various embodiments of the invention, some, but not all, of the ions in the ion chain are initialized to be in an excited state. The operations performed on the ion chain changes *which* ions are excited - as described herein, the bichromatic driving field stimulates excitation hopping from each excited ion to another ion (which may or may not already be in an excited state) - but does not alter the *number* of excited ions. Excited state hopping is bi-directional, but a preferred hopping direction can be imposed, as disclosed below for particular conditions. In particular, embodiments of the present invention provide controllable and selectable modes of excitation hopping among the ions within a trapped ion chain in a gradient field. Controllable and selectable modes include, but are not limited to nearest-neighbor hopping, next-nearest neighbor hopping, and so forth. In certain embodiments, the particular ion species is Strontium, specifically ⁸⁸Sr⁺.

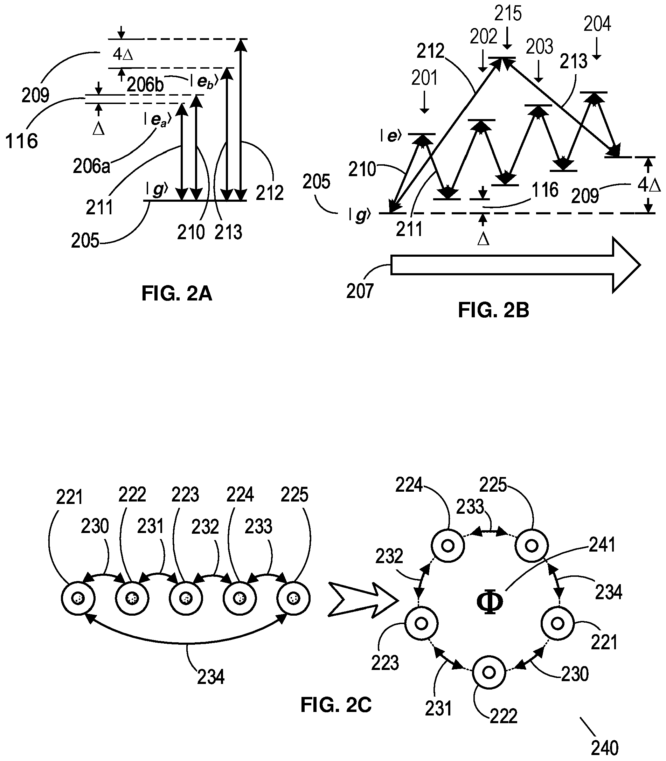

Fig. 2A is an energy-level diagram showing bichromatic driving field pair **210 - 211** and bichromatic driving field pair **212 - 213** for bridging ion resonance differences induced by a gradient field, according to an embodiment of the present invention. Bridging the gap enables excitation hopping in the presence of the gradient field. Both driving field pairs are referenced from a ground state |*g*〉 205. Driving field pair **210 - 211** has an excited state |*eₐ*〉 **206a,** having a bichromatic energy difference Δ 116; and driving field pair **212 - 213** has an excited state |*e_{b}*〉 **206b,** having a bichromatic energy difference 4Δ **209.** Bichromatic energy difference **209** is 4Δ in this non-limiting example, because there are five ions in the ion chain of this example, having a maximum energy difference of 4Δ.

Fig. 2B conceptually illustrates the tailoring of controlled resonances to implement mixed excitation hopping that bring about a simulated topology, according to another embodiment of the present invention. In the presence of a gradient field **207,** the ground state energies of the ions in the chain are displaced, as previously described. Excited states **201, 202, 203,** and **204** correspond respectively to the first four ions in the chain of five ions, and have an energy difference Δ **116** from one ion to the next.

Fig. 2C conceptually illustrates the correspondence between a linear chain of ions 221, 222, 223, 224 and **225** and a simulated ring topology 240 of the same ions. Nearest-neighbor hoppings **230, 231, 232,** and **233** are implemented by bichromatic transitions having energy difference Δ 116, as illustrated in Fig. 2A and Fig. 2B; and fourth-neighbor hopping **234** between ion **221** and ion **225** is implemented by the bichromatic transition having energy difference 4Δ **209,** as also illustrated in Fig. 2A and Fig. 2B.

In a related embodiment, the phases of the bichromatic pairs are chosen to generate synthetic gauge fields, simulating a discrete 1-dimensional Aharonov-Bohm ring with a magnetic flux Φ **241** passing through ring **240.** According to this embodiment, the Hamiltonian includes a hopping term with phase components determined by multiples of *ϕ = 2π*Φ/*N,* where *N* is the number of ions. The direction and velocity of the excitation hopping is determined by the sign and magnitude, respectively, of flux Φ **241.** In an additional related embodiment, the ring has periodic boundary conditions for an odd number of excited ions, and aperiodic boundary conditions for an even number of excited ions.

According to a further related embodiment, magnetic flux Φ **241** supports a persistent current around the ring due to the Aharonov-Bohm effect. As the ring system evolves due to the hopping transfer of excitation states from ion to ion, a wave packet propagates around the ring at a constant velocity. For maximal velocity in the limit of large N the time for the packet to revolve around the ring is *N*/2Ω, where Ω is the Rabi frequency of the ion transition.

Other embodiments of the invention provide simulation of topologies including, but not limited to: a triangular spin ladder; a 2-dimensional helix on a cylinder; a 2-dimensional helix on a torus; a torus with magnetic flux across both non-simply-connected cycles of the torus; and a Möbius strip.

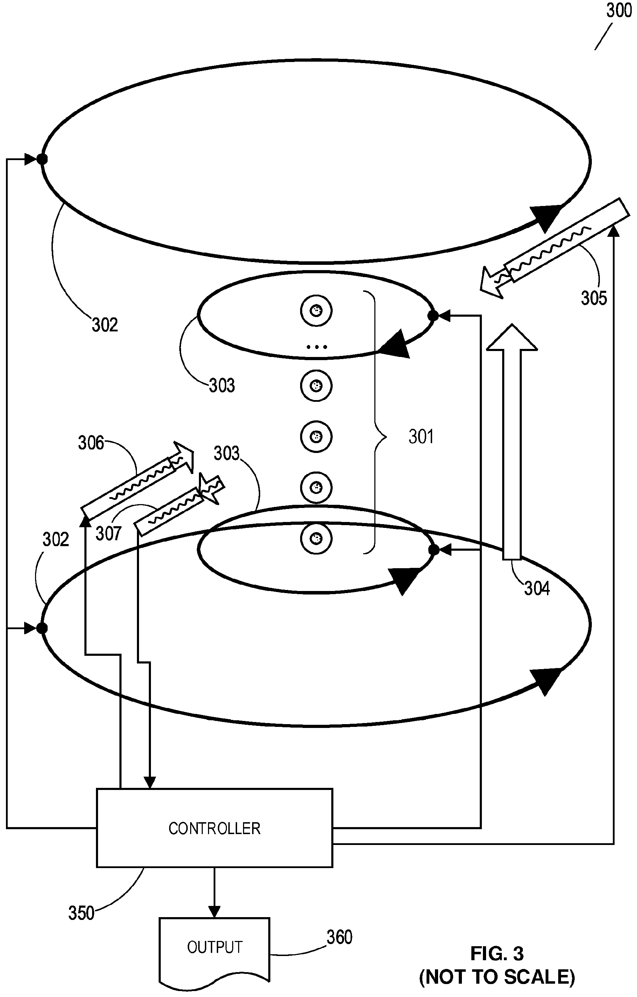

Fig. 3 is a component diagram of apparatus **300** for performing a quantum simulation, according to an embodiment of the present invention, featuring a trapped ion chain **301** (RF trap and vacuum envelope not shown) in the presence of a gradient field **304.** A first magnet **302,** shown as a Helmholtz coil, provides a substantially uniform magnetic field, and a second magnet **303,** shown as an anti-Helmholtz coil, establishes gradient field **304** in the vicinity of the ions. A driving laser **305** provides bichromatic pulses for excitation hopping, as previously described. A scattering laser **306** enables state-selective fluorescence of the states of the individual ions of ion chain **301,** in conjunction with a photon detector **307** to detect fluorescence from the ions according to the states of the individual ions and thereby determine which ions are in an excited state. In a related embodiment, photon detector **307** is a charge-coupled device (CCD), while in another embodiment photon detector is a single photon counting module (SPCM). A controller device **350** provides automated control of the operations of magnets **302** and **303,** driving laser **305,** scattering laser **306,** and photon detector **307.** Controller **305** controls the components to initialize ion chain **301** and also provides analysis of the evolving state of ion chain **301,** including an output **360** of the simulation. In another related embodiment, scattering laser **306** emits radiation in the 422 nanometer range.

In still another embodiment of the present invention, driving laser **305** induces a Bloch sphere rotation on the quantum state of the ions, thereby permitting scattering laser **306** to determine other quantum properties of the ions.

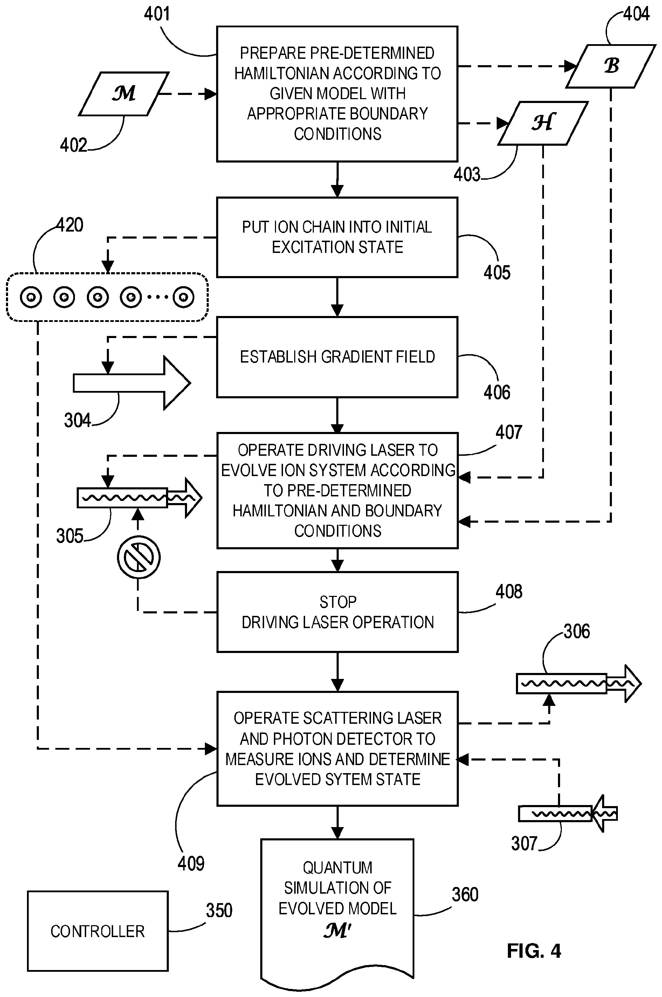

Fig. 4 is a flowchart of a method for quantum simulation, according to an embodiment of the present invention. In a step **401** a predetermined Hamiltonian **403** is prepared for a given model **402** having appropriate boundary conditions **404.** Model **402** is to be quantum simulated by an ion chain **420** in gradient field **304** with the field settings for bichromatic laser **305** to as required to realize Hamiltonian **403.** Accordingly, Hamiltonian **403** contains terms, including but not limited to hopping terms and phase terms, so that it corresponds to the Hamiltonian of model **402.**

In a step **405** ion chain **420** is put into an initial excitation state, wherein at least some of the ions are in an excited state, but not all the ions are in an excited state. Any technique of the art for putting an ion into an excitation state is usable for this step. Then, in a step **406** gradient field **304** is established. Next, in a step **407** driving laser **305** is operated according to the parameters of predetermined Hamiltonian **403** consistent with boundary conditions **404.** This will cause the excitation state of ion chain **420** to evolve in a manner that simulates the behavior that would be expected of model **402.** It is once again noted that the number of excited ionic states is conserved under evolution. The distribution of the excited states, however, will change to simulate the behavior that would be exhibited by model **402.**

At some point, in a step **408,** driving laser **305** is stopped. Then, in a step **409,** scattering laser **306** is operated to cause the ions of ion chain **420** to selectively fluoresce according to the electronic state in which they happen to be. Input from photon detector **307** then identifies which ions are in the excited state, thereby determining the state of the simulation of model **402.** From this determination, an output **360** reports the simulated quantum state of model **402.**

In a related embodiment, controller **350** receives a predetermined Hamiltonian and performs the rest of the steps of this method in an automated fashion.

## Claims

1. A method of quantum simulation of a model to be simulated, the method comprising:
providing a chain of trapped ions (420) for simulating the model;
preparing a predetermined Hamiltonian (403) according to the model (401);
putting the chain of trapped ions into an initial excitation state (405), wherein at least some of the ions are in an excited state but not all of the ions are in an excited state;
establishing a gradient field (406) in the vicinity of the chain of trapped ions, wherein the gradient field alters at least one energy level to differ from an ion of the chain to another ion of the chain by at least one energy gap;
operating a driving laser (407) to stimulate excitation hopping from a first ion of the chain to a second ion of the chain, wherein the driving laser provides a pulse having a bichromatic driving field pair for bridging an energy gap and thereby enabling excitation hopping in the presence of the gradient field, wherein the first ion and the second ion have an energy difference in the presence of the gradient field, such that the energy difference is driven by a bichromatic energy difference, wherein the bichromatic energy difference is a difference between driving field energies of the bichromatic driving field pair;
operating a scattering laser (409) to enable state-selective fluorescence of the ions of the chain; and
operating a photon detector (409) to determine from the state-selective fluorescence which ions of the chain are in an excited state, thereby determining a state of the simulation of the model.

2. The method of claim 1, wherein the gradient field is a magnetic field.

3. The method of claim 1, wherein the bichromatic driving field pair has phases to generate a synthetic gauge field.

4. The method of claim 3, wherein the quantum simulation includes simulation of a magnetic field.

5. The method of claim 1, wherein the quantum simulation includes generating a simulated topology by controlling excitation hopping between ions in the chain, wherein:
the hopping is controlled by the bichromatic driving field to simulate specific topologies; and
the coupling between ions is adjusted according to the resonance conditions induced by the gradient field and bichromatic field pair.

6. The method of claim 5, wherein the simulated topology is selected from a group consisting of:
a ring;
a triangular spin ladder;
a 2-dimensional helix on a cylinder;
a 2-dimensional helix on a torus;
a torus with magnetic flux across a non-simply-connected cycle; and
a Mobius strip.

7. An apparatus for quantum simulation of a model to be simulated, the apparatus comprising:
a chain of trapped ions (301) for simulating the model (402);
a device (303) for establishing a gradient field (304) in the vicinity of the chain of trapped ions, wherein the gradient field alters at least one energy level to differ from an ion of the chain to another ion of the chain by at least one energy gap;
a driving laser (305) for stimulating excitation hopping from an excited ion of the chain to another ion of the chain, wherein the driving laser is operative to provide a pulse having a bichromatic driving field pair for bridging an energy gap and thereby enabling excitation hopping in the presence of the gradient field;
a scattering laser (306) for enabling state-selective fluorescence of the ions of the chain;
a photon detector (307) for determining from the state-selective fluorescence which ions of the chain are in an excited state, and which is thereby operative to determine a state of the simulation of the model; and
a controller (350) for controlling the apparatus, wherein the controller is operative to:
receive a predetermined Hamiltonian according to the model;
control the apparatus to:
put the chain of trapped ions into an initial excitation state, wherein at least some of the ions are in an excited state but not all of the ions are in an excited state;
establish a gradient field in the vicinity of the chain of trapped ions, wherein the gradient field alters at least one energy level to differ from an ion of the chain to another ion of the chain by at least one energy gap;
stimulate excitation hopping from a first ion of the chain to a second ion of the chain, wherein the first ion and the second ion have an energy difference in the presence of the gradient field, such that the energy difference is driven by a bichromatic energy difference, wherein the bichromatic energy difference is a difference between driving field energies of the bichromatic driving field pair,
enable state-selective fluorescence of the ions of the chain; and determine from the state-selective fluorescence which ions of the chain are in an excited state, thereby determining a state of the simulation of the model; and
output the state of the simulation of the model (360).

8. The apparatus of claim 7, wherein the device for establishing the gradient field is a magnet, and wherein the gradient field is a magnetic gradient field.

## Patentansprüche

1. Verfahren zur Quantensimulation eines zu simulierenden Modells, wobei das Verfahren umfasst:
Bereitstellen einer Kette von eingefangenen Ionen (420) zum Simulieren des Modells;
Erstellen eines vorbestimmten Hamiltonoperators (403) gemäß dem Modell (401);
Versetzen der Kette von eingefangenen Ionen in einen anfänglichen Anregungszustand (405), wobei sich zumindest einige der Ionen in einem angeregten Zustand befinden, aber sich nicht alle Ionen in einem angeregten Zustand befinden;
Aufbauen eines Gradientenfeldes (406) in der Nähe der Kette der eingefangenen Ionen, wobei das Gradientenfeld zumindest ein Energieniveau so verändert, dass es sich von einem Ion der Kette zu einem anderen Ion der Kette um zumindest eine Energielücke unterscheidet; Betreiben eines Antriebslasers (407), um einen Anregungssprung von einem ersten Ion der Kette zu einem zweiten Ion der Kette zu stimulieren, wobei der Antriebslaser einen Impuls mit einem bichromatischen Antriebsfeldpaar zum Überbrücken eine Energielücke bereitstellt und dadurch einen Anregungssprung in Gegenwart des Gradientenfeldes ermöglicht, wobei das erste Ion und das zweite Ion in Gegenwart des Gradientenfeldes eine Energiedifferenz derart aufweisen, dass die Energiedifferenz durch eine bichromatische Energiedifferenz angetrieben wird, wobei die bichromatische Energiedifferenz eine Differenz zwischen Antriebsfeldenergien des bichromatischen Antriebsfeldpaares ist;
Betreiben eines Streulasers (409), um eine zustandsselektive Fluoreszenz der Ionen der Kette zu ermöglichen; und
Betreiben eines Photonendetektors (409), um aus der zustandsselektiven Fluoreszenz zu bestimmen, welche Ionen der Kette sich in einem angeregten Zustand befinden, wodurch ein Zustand der Simulation des Modells bestimmt wird.

2. Verfahren nach Anspruch 1, wobei das Gradientenfeld ein Magnetfeld ist.

3. Verfahren nach Anspruch 1, wobei das bichromatische Antriebsfeldpaar Phasen hat, um ein synthetisches Eichfeld zu erzeugen.

4. Verfahren nach Anspruch 3, wobei die Quantensimulation eine Simulation eines Magnetfeldes einschließt.

5. Verfahren nach Anspruch 1, wobei die Quantensimulation das Erzeugen einer simulierten Topologie durch Steuern des Anregungssprungs zwischen Ionen in der Kette einschließt, wobei:
das Springen durch das bichromatische Antriebsfeld gesteuert wird, um spezifische Topologien zu simulieren; und
das Koppeln zwischen Ionen gemäß den durch das Gradientenfeld und das bichromatische Feldpaar induzierten Resonanzbedingungen angepasst wird.

6. Verfahren nach Anspruch 5, wobei die simulierte Topologie ausgewählt ist aus einer Gruppe bestehend aus:
einem Ring;
einer dreieckigen Spinleiter;
einer 2-dimensionalen Helix auf einem Zylinder;
einer 2-dimensionalen Helix auf einem Torus;
einem Torus mit magnetischem Fluss über einen nicht einfach zusammenhängenden Zyklus; und einem Mobius-Streifen.

7. Einrichtung zur Quantensimulation eines zu simulierenden Modells, wobei die Vorrichtung umfasst:
eine Kette eingefangener Ionen (301) zum Simulieren des Modells (402);
eine Vorrichtung (303) zum Aufbauen eines Gradientenfeldes (304) in der Nähe der Kette eingefangener Ionen, wobei das Gradientenfeld zumindest ein Energieniveau so verändert, dass es sich von einem Ion der Kette zu einem anderen Ion der Kette um zumindest eine Energielücke unterscheidet;
einen Antriebslaser (305) zum Stimulieren eines Anregungssprungs von einem angeregten Ion der Kette zu einem anderen Ion der Kette, wobei der Antriebslaser betriebsfähig ist, um einen Impuls mit einem bichromatischen Antriebsfeldpaar zum Überbrücken einer Energielücke bereitzustellen und dadurch einen Anregungssprung in Gegenwart des Gradientenfeldes zu ermöglichen;
einen Streulaser (306) zum Ermöglichen einer zustandsselektiven Fluoreszenz der Ionen der Kette;
einen Photonendetektor (307) um aus der zustandsselektiven Fluoreszenz zu bestimmen, welche Ionen der Kette sich in einem angeregten Zustand befinden, und der dadurch betriebsfähig ist, einen Zustand der Simulation des Modells zu bestimmen; und
eine Steuereinheit (350) zum Steuern der Einrichtung, wobei die Steuereinheit betriebsfähig ist, um:
einen vorbestimmten Hamiltonoperator gemäß dem Modell zu empfangen;
die Einrichtung zu steuern, um:
die Kette eingefangener Ionen in einen anfänglichen Anregungszustand zu versetzen, wobei zumindest einige der Ionen sich in einem angeregten Zustand befinden, sich aber nicht alle Ionen in einem angeregten Zustand befinden;
ein Gradientenfeld in der Nähe der Kette eingefangener Ionen aufzubauen, wobei das Gradientenfeld zumindest ein Energieniveau so verändert, dass es sich von einem Ion der Kette zu einem anderen Ion der Kette um zumindest eine Energielücke unterscheidet;
einen Anregungssprung von einem ersten Ion der Kette zu einem zweiten Ion der Kette zu stimulieren, wobei das erste Ion und das zweite Ion in Gegenwart des Gradientenfeldes eine Energiedifferenz derart aufweisen, dass die Energiedifferenz durch eine bichromatische Energiedifferenz angetrieben wird, wobei die bichromatische Energiedifferenz eine Differenz zwischen Antriebsfeldenergien des bichromarischen Antriebsfeldpaares ist,
eine zustandsselektive Fluoreszenz der Ionen der Kette zu ermöglichen; und
aus der zustandsselektiven Fluoreszenz zu bestimmen, welche Ionen der Kette sich in einem angeregten Zustand befinden, wodurch ein Zustand der Simulation des Modells bestimmt wird; und
Ausgeben des Zustands der Simulation des Modells (360).

8. Einrichtung nach Anspruch 7, wobei die Vorrichtung zum Aufbauen des Gradientenfeldes ein Magnet ist und wobei das Gradientenfeld ein magnetisches Gradientenfeld ist.

## Revendications

1. Procédé de simulation quantique d'un modèle à simuler, le procédé comprenant :
la fourniture d'une chaîne d'ions piégés (420) pour simuler le modèle ;
la préparation d'un hamiltonien prédéterminé (403) selon le modèle (401) ;
la mise de la chaîne d'ions piégés dans un état d'excitation initial (405), où au moins certains des ions sont dans un état excité, mais tous les ions ne sont pas dans un état excité ;
l'établissement d'un champ de gradient (406) à proximité de la chaîne d'ions piégés, où le champ de gradient modifie au moins un niveau d'énergie pour qu'il diffère d'un ion de la chaîne à un autre ion de la chaîne d'au moins un écart d'énergie ;
l'actionnement d'un laser d'entraînement (407) pour stimuler un saut d'excitation d'un premier ion de la chaîne à un deuxième ion de la chaîne, où le laser d'entraînement fournit une impulsion ayant une paire de champs d'entraînement bichromatiques pour combler un écart d'énergie et permettre ainsi un saut d'excitation en présence du champ de gradient, où le premier ion et le deuxième ion ont une différence d'énergie en présence du champ de gradient, de telle sorte que la différence d'énergie soit entraînée par une différence d'énergie bichromatique, où la différence d'énergie bichromatique est une différence entre les énergies de champ d'entraînement de la paire de champs d'entraînement bichromatiques ;
l'actionnement d'un laser de diffusion (409) pour permettre une fluorescence sélective de l'état des ions de la chaîne ; et
l'actionnement d'un détecteur de photons (409) pour déterminer à partir de la fluorescence sélective de l'état quels ions de la chaîne sont dans un état excité, déterminant ainsi un état de la simulation du modèle.

2. Procédé selon la revendication 1, où le champ de gradient est un champ magnétique.

3. Procédé selon la revendication 1, où la paire de champs d'entraînement bichromatiques a des phases pour générer un champ de jauge synthétique.

4. Procédé selon la revendication 3, où la simulation quantique inclut la simulation d'un champ magnétique.

5. Procédé selon la revendication 1, où la simulation quantique inclut la génération d'une topologie simulée en contrôlant le saut d'excitation entre les ions de la chaîne, où :
le saut est contrôlé par le champ d'entraînement bichromatique afin de simuler des topologies spécifiques ; et
le couplage entre les ions est ajusté en fonction des conditions de résonance induites par le champ de gradient et la paire de champs bichromatiques.

6. Procédé selon la revendication 5, où la topologie simulée est sélectionnée dans un groupe constitué par :
un anneau ;
une échelle de spin triangulaire ;
une hélice bidimensionnelle sur un cylindre ;
une hélice bidimensionnelle sur un tore ;
un tore avec un flux magnétique à travers un cycle non simplement connecté ; et
un ruban de Möbius.

7. Appareil pour la simulation quantique d'un modèle à simuler, l'appareil comprenant :
une chaîne d'ions piégés (301) pour simuler le modèle (402) ;
un dispositif (303) pour établir un champ de gradient (304) à proximité de la chaîne d'ions piégés, où le champ de gradient modifie au moins un niveau d'énergie pour qu'il diffère d'un ion de la chaîne à un autre ion de la chaîne d'au moins un écart d'énergie ;
un laser d'entraînement (305) pour stimuler un saut d'excitation d'un ion excité de la chaîne à un autre ion de la chaîne, où le laser d'entraînement est opérationnel pour fournir une impulsion ayant une paire de champs d'entraînement bichromatiques pour combler un écart d'énergie et permettre ainsi un saut d'excitation en présence du champ de gradient ;
un laser de diffusion (306) pour permettre la fluorescence sélective de l'état des ions de la chaîne ;
un détecteur de photons (307) pour déterminer à partir de la fluorescence sélective de l'état quels ions de la chaîne sont dans un état excité, et qui est ainsi opérationnel pour déterminer un état de la simulation du modèle ; et
un contrôleur (350) pour contrôler l'appareil, où le contrôleur est opérationnel pour :
recevoir un hamiltonien prédéterminé selon le modèle ;
commander l'appareil pour :
mettre la chaîne d'ions piégés dans un état d'excitation initial, où au moins certains des ions sont dans un état excité, mais tous les ions ne sont pas dans un état excité ;
établir un champ de gradient à proximité de la chaîne d'ions piégés, où le champ gradient modifie au moins un niveau d'énergie pour qu'il diffère d'un ion de la chaîne à un autre ion de la chaîne d'au moins un écart d'énergie ;
stimuler un saut d'excitation d'un premier ion de la chaîne à un deuxième ion de la chaîne, où le premier ion et le deuxième ion ont une différence d'énergie en présence du champ de gradient, de telle sorte que la différence d'énergie est entraînée par une différence d'énergie bichromatique, où la différence d'énergie bichromatique est une différence entre les énergies de champ d'entraînement de la paire de champs d'entraînement bichromatiques,
permettre la fluorescence sélective de l'état des ions de la chaîne ; et
déterminer à partir de la fluorescence sélective de l'état quels ions de la chaîne sont dans un état excité, déterminant ainsi un état de la simulation du modèle ; et
sortir l'état de la simulation du modèle (360).

8. Appareil selon la revendication 7, où le dispositif pour établir le champ de gradient est un aimant, et où le champ de gradient est un champ de gradient magnétique.
